# EUROPÄISCHE PATENTSCHRIFT

(11) **EP 2 678 272 B1**
(45) Veröffentlichungstag und Bekanntmachung des Hinweises auf die Patenterteilung: **17.10.2018**
(21) Anmeldenummer: 12705091.2
(22) Anmeldetag: 10.02.2012
(51) Int. Cl.: C01B 33/193, C01B 33/12, B01J 39/04, B01J 39/16, B01J 39/18, B01J 49/53

(54) **VERFAHREN ZUR REINIGUNG STARKER SÄUREN BZW. STARK SAURER MEDIEN VON ZWEI- UND HÖHERWERTIGEN METALLIONEN**
METHOD FOR THE SEPARATION OF METAL IONS THAT ARE DIVALENT OR HIGHER FROM STRONG ACIDS OR HIGHLY ACIDIC MEDIA
PROCÉDÉ D'ÉPURATION D'ACIDES FORTS OU DE MILIEUX ACIDES FORTS PAR LA SÉPARATION D'IONS MÉTALLIQUES BIVALENTS ET DE VALENCE SUPÉRIEURE

(30) Priorität: 22.02.2011 DE 102011004533
(43) Veröffentlichungstag der Anmeldung: 01.01.2014
(73) Patentinhaber: Evonik Degussa GmbH, 45128 Essen (DE)
(72) Erfinder: PANZ, Christian, 50389 Wesseling-Berzdorf (DE); PAULAT, Florian, 25709 Marne (DE); TITZ, Guido, 52396 Heimbach (DE); MÜLLER, Sven, 53125 Bonn (DE); ERLHÖFER, Peter, 50389 Wesseling (DE); RUF, Markus, 53347 Alfter-Witterschlick (DE); FRINGS, Bodo, 33758 Schloß Holte (DE); RAULEDER, Hartwig, 79618 Rheinfelden (DE); BARTHEL, Thomas, 63755 Alzenau-Wasserlos (DE); SIRAY, Mustafa, 53127 Bonn (DE); BEHNISCH, Jürgen, 53359 Rheinbach (DE)
(86) Internationale Anmeldenummer: PCT/EP2012/052254
(87) Internationale Veröffentlichungsnummer: WO 2012/113657

(56) Entgegenhaltungen:
- WO-A1-2010/037702
- US-A- 4 857 290
- TROCHIMCZUK A W: "Novel ion-exchange/coordination resin with carboxyethyl phosphonate ligands", EUROPEAN POLYMER JOURNAL, PERGAMON PRESS LTD. OXFORD, GB, Bd. 34, Nr. 7, 1. Juli 1998 (1998-07-01), Seiten 1047-1051, XP004145404, ISSN: 0014-3057, DOI: 10.1016/S0014-3057(97)00218-8
- TROCHIMCZUK W A: "New ion-exchange/coordination resins with carboxylate and phosphate functional groups", EUROPEAN POLYMER JOURNAL, PERGAMON PRESS LTD. OXFORD, GB, Bd. 35, Nr. 8, 1. August 1999 (1999-08-01) , Seiten 1457-1464, XP004362326, ISSN: 0014-3057, DOI: 10.1016/S0014-3057(98)00220-1

## Beschreibung

Die vorliegende Erfindung betrifft ein Verfahren zur Reinigung starker Säuren bzw. stark saurer Medien von zwei- und höherwertigen Metallionen, das im Rahmen der Herstellung von hochreinem Siliziumdioxid eingesetzt werden kann. Ferner betrifft die Erfindung die Verwendung spezieller Ionenaustauscher für die Durchführung des erfindungsgemäßen Verfahrens und die dabei erhaltenen hochreinen Siliziumdioxide.

Ausgangspunkt für die Erfindung war der fortbestehende Bedarf an einem effektiven und kostengünstigen Verfahren zur Herstellung hochreinen Siliziumdioxids.

Hochreines Siliziumdioxid kann zur Herstellung von sogenanntem Solarsilizium, das für die Produktion photovoltaischer Zellen benötigt wird, eingesetzt werden und hat deshalb eine enorme wirtschaftliche Bedeutung.

Ein vorteilhaftes Verfahren zur Herstellung von hochreinem Siliziumdioxid unter Verwendung von Silikatlösungen ist in der Schrift WO 2010/037702 A1 beschrieben. Nachteilig an diesem Verfahren ist jedoch, dass das erhaltene Siliziumdioxid einem aufwendigen Waschprozess unterzogen werden muss und das dafür verwendete Waschmedium stark sauer sein muss. Die pH-Werte der für die Siliziumdioxid-Wäsche eingesetzten Waschsäuren müssen unter 2, besonders bevorzugt sogar unter 0,5 betragen, und selbst bei diesen niedrigen pH-Werten adsorbieren zwei- und höherwertige Metallverunreinigungen noch so stark an die Oberfläche der Siliziumdioxidpartikel, dass hohe Mengen stark saurer Waschsäure zur Reinigung erforderlich sind. Aus diesem Grund ist das bisherige Verfahren nicht nur kostenintensiv, sondern es birgt im Hinblick auf die Arbeitssicherheit, insbesondere beim Chargenwechsel der Waschsäure, auch Risiken, zumal dieser Prozessschritt auch mit der Gefahr einer Einschleusung von Verunreinigungen verbunden ist.

Ein weiterer Nachteil des Verfahrens gemäß der Schrift WO 2010/037702 A1 besteht in der Tatsache, dass Verunreinigungen des Siliziumdioxids mit Titanionen unter den Bedingungen des sauren Waschprozesses nicht effektiv abgetrennt werden können. Um diesem Problem zu begegnen, wird bevorzugt ein Peroxid zugesetzt, das die Titanionen nicht nur über eine Komplexierung entfernbar macht, sondern wegen der Farbe des gebildeten Komplexes auch den Fortschritt ihrer Entfernung sichtbar werden lässt.

Nachteilig an Peroxiden in sauren Medien ist jedoch, dass sich in Gegenwart von Eisen(II)-Ionen, die in dem Prozess üblicherweise vorhanden sind, Hydroxyl-Radikale bilden (Fentons Reagenz). Diese Radikale stellen ein sehr starkes Oxidationsmittel dar und erfordern wegen ihrer korrosiven Wirkung besonders hochwertige Anlagen-Werkstoffe, die den Herstellprozess weiter verteuern.

Eine Aufgabe der vorliegenden Erfindung bestand deshalb in der Bereitstellung eines Verfahrens zur Herstellung von hochreinem Siliziumdioxid, das im Vergleich zum Stand der Technik weniger kostenintensiv ist. Insbesondere sollte das Verfahren dahingehend verbessert werden, dass der hohe Säureeinsatz für den aufwendigen Waschprozess reduziert werden kann. Des Weiteren sollte dieser Waschprozess - auch wegen der risikobehafteten Handhabung stark saurer Medien - vereinfacht werden. Schließlich bestand eine Aufgabe darin, das Verfahren insofern zu verbessern, dass auf den Zusatz von Peroxiden verzichtet werden kann.

Diese Aufgaben werden durch das in der nachfolgenden Beschreibung, den Beispielen und den Ansprüchen beschriebene Verfahren und durch die Verwendung spezieller Ionenaustauscherharze im Rahmen des Verfahrens gelöst.

Die Forschungsarbeiten gingen von einem Herstellverfahren gemäß der Schrift WO 2010/037702 A1 aus, bei dem hochreines Siliziumdioxid durch die nachfolgend genannten Prozessschritte erhalten wird:
a. Herstellung einer Vorlage aus einem Säuerungsmittel oder einem Säuerungsmittel und Wasser mit einem pH-Wert von kleiner 2, bevorzugt kleiner 1,5, besonders bevorzugt kleiner 1, ganz besonders bevorzugt kleiner 0,5.
b. Bereitstellen einer Silikatlösung mit einer Viskosität von 2 bis 10000 Poise.
c. Zugabe der Silikatlösung aus Schritt b. in die Vorlage aus Schritt a. derart, dass der pH-Wert der erhaltenen Fällsuspension jederzeit auf einem Wert kleiner 2, bevorzugt kleiner 1,5, besonders bevorzugt kleiner 1 und ganz besonders bevorzugt kleiner 0,5 bleibt.
d. Abtrennen und Waschen des erhaltenen Siliziumdioxids, wobei das Waschmedium einen pH-Wert kleiner 2, bevorzugt kleiner 1,5, besonders bevorzugt kleiner 1 und ganz besonders bevorzugt kleiner 0,5 aufweist.
e. Neutralwaschen des Siliziumdioxids mit vollentsalztem Wasser (VE-Wasser).
f. Trocknen des erhaltenen Siliziumdioxids.

Die betreffenden Untersuchungen führten zu dem unerwarteten Ergebnis, dass sich sämtliche vorgenannten Aufgaben durch den Einsatz mindestens eines speziellen Ionenaustauscherharzes vom Phosphonat-Typ lösen lassen. Dabei ist erfindungsgemäß von untergeordneter Bedeutung, ob das Ionenaustauscherharz bereits bei der Ausfällung des Siliziumdioxids mit der flüssigen Phase der Fällsuspension in Kontakt gebracht wird, also im Rahmen von Prozessschritt c., oder ob erst das Waschmedium im Rahmen von Prozessschritt d. den Kontakt mit dem Ionenaustauscherharz erfährt. Bevorzugt erfolgt der Kontakt mit dem Ionenaustauscherharz erst im Rahmen des Waschens, aber auch ein vorheriger Kontakt mit der flüssigen Phase der Fällsuspension ist erfindungsgemäß möglich (Ionenaustausch sowohl am sauren Waschmedium, als auch an der flüssigen Phase der Fällsuspension).

Bei - im Verhältnis zum aufzureinigenden Siliziumdioxid - ausreichend großer Menge des verwendeten Phosphonat-Ionenaustauschers bzw. bei hinreichender IonenaustauschKapazität desselben kann es möglich sein, auf das Waschen gemäß Prozessschritt d. zu verzichten und eine ausreichende Reinigung im Rahmen von Prozessschritt c. erreichen.

Vorteilhaft ist an der Erfindung insbesondere, dass die besonders störenden zwei- und höherwertigen Metallverunreinigungen bzw. Metallionen von den Phosphonat-Ionenaustauschern sehr gut gebunden werden, wohingegen Alkaliionen diese problemlos passieren. Die Alkaliionen-Passage ist unschädlich, weil deren spätere Abtrennung durch einfaches Waschen des Siliziumdioxids mit VE-Wasser möglich ist. Obwohl Alkaliionen die Hauptverunreinigung darstellen, weisen die Phosphonat-Ionenaustauscher infolge der guten Passage der Alkaliionen sehr gute Standzeiten auf. Die störenden zwei- und höherwertigen Metallionen sind in dem aufzureinigenden Siliziumdioxid demgegenüber nur in Spuren enthalten und beeinträchtigen die Standzeit daher nur wenig.

Die nach Durchführung des erfindungsgemäßen Verfahrens in dem sauren Medium enthaltene Alkalisalz-Fracht kann beispielsweise unter Nutzung des Donnan-Effekts mittels eines Säure-Retardationsverfahrens entfernt werden, wie es der Fachmann beispielsweise im Rahmen der Anodisierung von Aluminium nach dem Eloxal-Verfahren einsetzt. Für das Säure-Retardationsverfahren eignen sich spezielle Ionenaustauscherharze, die bevorzugt quartäre Amine als funktionelle Gruppen enthalten; beispielhaft sei Lewatit® K 6387 von der Firma Lanxess genannt.

Die Regeneration der Phosphonat-Ionenaustauscher erfolgt vorzugsweise unter Verwendung einer alkalischen Tartratlösung. Die Untersuchungen, im Rahmen derer das erfindungsgemäße Verfahren entwickelt wurde, haben nämlich überraschend gezeigt, dass sich alkalische Tartratlösung auch für die Entfernung der besonders stark an das Ionenaustauscherharz gebundenen drei- und höherwertigen Metallionen sehr gut eignet. Möglich ist eine Regeneration aber auch mit anderen Reagenzien, insbesondere mit solchen, die hinreichend starke Komplexe mit den vom Siliziumdioxid abgetrennten zwei- oder höherwertigen Metallionen bilden. Geeignete Komplexbildner sind dem Fachmann bekannt, beispielsweise können alkalische Citrat-, Oxalat- oder EDTA- bzw. Ethylendiamintetraacetat-Lösungen zum Einsatz kommen. Neben der erheblichen Säureeinsparung liegt ein Vorteil des erfindungsgemäßen Verfahrens in der Möglichkeit, aus den bei der Regeneration der Phosphonat-Ionenaustauscher erhaltenen Lösungen die enthaltenen Seltenerdmetalle zu gewinnen.

Bevorzugt wird die Regeneration des Phosphonat-Ionenaustauschers, gegebenenfalls auch die des für ein Säure-Retardationsverfahren eingesetzten Ionenaustauschers, im zeitlichen Rahmen des Siliziumdioxid-Herstellverfahrens durchgeführt, weil dadurch eine kontinuierliche Siliziumdioxid-Produktion ermöglicht wird.

Die erfindungsgemäß einsetzbaren, sogenannten Phosphonat-Ionenaustauscher lassen sich dadurch charakterisieren, dass sie mindestens eine funktionelle Gruppe vom Phosphonat- oder vom Phosphonsäure-Typ aufweisen. Unter einer funktionellen Gruppe vom Phosphonsäure-Typ ist eine Struktureinheit der Formel R-P(O)(OH)₂ zu verstehen, bei der R einen beliebigen Rest darstellen kann. Bevorzugt stellt der beliebige Rest R entweder ein Polymer bzw. das Ionenaustauscherharz selbst dar oder er ermöglicht mit diesem - als Brückenglied - eine Verbindung. Eine funktionelle Gruppe vom Phosphonat-Typ leitet sich erfindungsgemäß von einer beliebigen funktionellen Gruppe vom Phosphonsäure-Typ dadurch ab, dass eine oder beide der sauren P-gebundenen OH-Gruppen deprotoniert ist bzw. sind; dabei ist erfindungsgemäß von untergeordneter Bedeutung, welches Gegenion bzw. welche Gegenionen die funktionelle Gruppe vom Phosphonat-Typ aufweist. Vorzugsweise werden jedoch Ionenaustauscherharze mit Alkali-Phosphonat-Gruppen, also Phosphonat-Gruppen mit Alkalimetall-Gegenionen, für die Erfindung eingesetzt. Besonders bevorzugte Ionenaustauscherharze enthalten Aminomethylphosphonsäure- bzw. Aminomethylphosphonat-Funktionalitäten; dies sind insbesondere Struktureinheiten der Formel R-NHCH₂P(O)(OH)₂, wie sie beispielsweise der chelatisierende Ionenaustauscher Lewatit® TP 260 der Firma Lanxess AG enthält. Außerdem ist es erfindungsgemäß möglich, Ionenaustauscher mit Struktureinheiten der Formel R-NR'CH₂P(O) (OH)₂ einzusetzen, bei denen R' außer Wasserstoff ein beliebiger einwertiger Rest ist, der gleich oder verschieden von R sein kann.

Weitere zur Durchführung der Erfindung bevorzugt eingesetzte Ionenaustauscher sind solche, die zwei Phosphonsäure- bzw. Phosphonat-Gruppen an einem Kohlenstoffatom aufweisen, also über eine geminale Difunktionalität bzw. eine Struktureinheit der Formel RR'C[PO(OH)₂]₂ verfügen, bei der R' ein beliebiger einwertiger Rest ist, der gleich oder verschieden von R sein kann; beispielhaft für ein derartiges Ionenaustauscherharz sei Diphonix® der Firma Triskem genannt.

Die vorliegende Erfindung besteht demnach in einem verbesserten Verfahren zur Herstellung von hochreinem Siliziumdioxid, bei dem zu einer ein Säuerungsmittel enthaltenden Vorlage mit einem pH-Wert von kleiner 2,0 eine Silikatlösung gegeben wird, deren Viskosität von 0,1 bis 10000 Poise beträgt, mit der Maßgabe, dass der pH-Wert während der Zugabe jederzeit unter 2,0 liegt und die flüssige Phase der bei der Zugabe gebildeten Fällsuspension zwecks Ionenaustausch mit mindestens einem Phosphonat-Ionenaustauscher in Kontakt gebracht wird, nämlich in einem Verfahren zur Herstellung von hochreinem Siliziumdioxid, umfassend die nachfolgend genannten Prozessschritte
a. Herstellung einer Vorlage aus einem Säuerungsmittel oder einem Säuerungsmittel und Wasser mit einem pH-Wert von kleiner 2,
b. Bereitstellen einer Silikatlösung mit einer Viskosität von 0,1 bis 10000 Poise,
c. Zugabe der Silikatlösung aus Schritt b) in die Vorlage aus Schritt a) derart, dass der pH-Wert der erhaltenen Fällsuspension jederzeit auf einem Wert kleiner 2 bleibt,
d. Abtrennen und Waschen des erhaltenen Siliziumdioxids, wobei das Waschmedium einen pH-Wert kleiner 2 aufweist,
e. Neutralwaschen des Siliziumdioxids mit vollentsalztem Wasser (VE-Wasser),
f. Trocknen des erhaltenen Siliziumdioxids,
mit der Maßgabe, dass mindestens ein Phosphonat-Ionenaustauscher mit der flüssigen Phase der Fällsuspension im Rahmen von Prozessschritt c) oder mit dem Waschmedium im Rahmen von Prozessschritt d) oder mit beidem zwecks Ionenaustausch in Kontakt gebracht wird.

Bevorzugt wird das erfindungsgemäße Verfahren in der Weise durchgeführt, dass das Siliziumdioxid von der Fällsuspension abgetrennt und mindestens einmal mit einem sauren Waschmedium behandelt wird, dessen pH-Wert unter 2,0 beträgt, bevor der Ionenaustausch mit mindestens einem Phosphonat-Ionenaustauscher an dem sauren Waschmedium bzw. im Rahmen des Waschens vorgenommen wird. Bei dieser Ausführungsform kann auf einen Ionenaustausch an der Fällsäure bzw. an der flüssigen Phase der Fällsuspension verzichtet werden.

Erfindungsgemäß ist es jedoch auch möglich, sowohl an der Fällsäure, als auch an dem sauren Waschmedium, jeweils einen Ionenaustausch unter Verwendung mindestens eines Phosphonat-Ionenaustauschers vorzunehmen.

Die erfindungsgemäße Funktionalität der Phosphonat-Ionenaustauscher wird in der Regel nicht durch die Gegenwart weiterer funktioneller Gruppen im Austauscherharz beeinflusst. Vielmehr lässt sich die Kombination mit weiteren funktionellen Gruppen im Ionenaustauscherharz teilweise gezielt einsetzen. In diesem Zusammenhang wird beispielhaft auf Phosphonsäure- bzw. Phosphonat-Gruppen enthaltende Ionenaustauscherharze verwiesen, die zusätzlich über eine Sulfonsäure- bzw. Sulfonat-Funktionalität verfügen und dadurch helfen, die erforderliche schnelle Austauschkinetik sicherzustellen; ein derartiges erfindungsgemäß einsetzbares Ionenaustauscherharz ist beispielsweise Purolite® S957. Des Weiteren sind Phosphonat-Ionenaustauscher vorteilhaft einsetzbar, die zusätzlich Carboxylgruppen enthalten, wie der bereits genannte Ionenaustauscher Diphonix® der Firma Triskem.

Für die Durchführung der Erfindung von untergeordneter Bedeutung ist das Trägermaterial bzw. die chemische Zusammensetzung des Polymers, an das die funktionellen Gruppen vom Phosphonat- bzw. Phosphonsäure-Typ in der Regel gebunden sind. Erfindungsgemäß bevorzugt werden jedoch Ionenaustauscherharze eingesetzt, deren - vorzugsweise vernetztes - Trägermaterial Polystyrol, Polyacrylat oder ein Copolymer von diesen ist. Ebenfalls von untergeordneter Bedeutung ist die Beladung der erfindungsgemäß verwendeten Ionenaustauscherharze, sofern keine Beladung mit den abzutrennenden höherwertigen Ionen erfolgt. Üblicherweise werden die Ionenaustauscherharze unter Beladung mit Alkalimetall-Gegenionen geliefert und können in dieser Form ohne Weiteres für die Erfindung eingesetzt werden.

Die weiteren Kenndaten der erfindungsgemäß verwendbaren Ionenaustauscherharze, wie Schüttdichte, Partikelgrößenverteilung, Dichte und Ionenaustauschkapazität sind in Abhängigkeit von der apparativen Ausstattung und der verfahrenstechnischen Gestaltung der Anlage, in der der Ionenaustausch stattfinden soll, zu wählen; generell zutreffende Aussagen können hierzu nicht gemacht werden.

Ebenfalls von untergeordneter Bedeutung ist, ob für die Durchführung des erfindungsgemäßen Verfahrens ein Gleichstrom-, ein Gegenstrom-, ein Schichtbett-, ein Mehrkammer-, ein Doppelfluss-, ein Sandwich- ein Mischbett- oder ein Triobett-Austauscher zum Einsatz kommt; die Verwendung von Gegenstromaustauschern ist jedoch bevorzugt. Sowohl Säulen-, als auch Membran- und alle weiteren bekannten Typen von Ionenaustauschern können erfindungsgemäß Verwendung finden.

Des Weiteren kann das erfindungsgemäße Herstellverfahren nicht nur im Chargen-Betrieb bzw. diskontinuierlich, sondern auch im kontinuierlichen Betrieb vollzogen werden.

Generell ist darauf hinzuweisen, dass erfindungsgemäß in erster Linie wichtig ist, dass das Ionenaustauscherharz mit der flüssigen Phase der Fällsuspension bzw. dem sauren Waschmedium in Kontakt gebracht wird. Die genaue verfahrenstechnische Ausführung des Prozesses kann den jeweiligen Gegebenheiten und Zielsetzungen angepasst werden; die entsprechenden Gestaltungsmöglichkeiten sind dem Fachmann bekannt.

In einer besonderen Ausführungsform der Erfindung ist es auch möglich, dem im Rahmen der Siliziumdioxid-Herstellung zum Einsatz kommenden sauren Medium mindestens einen in diesem löslichen Phosphonat-Ionenaustauscher zuzusetzen und den Ionenaustausch in flüssiger Phase zu vollziehen.

Im Hinblick auf die chemische Zusammensetzung der flüssigen Phase der Fällsuspension bzw. des sauren Waschmediums gibt es keinerlei Einschränkungen. In dem erfindungsgemäßen Verfahren lassen sich vorzugsweise Salzsäure, Phosphorsäure, Salpetersäure, Schwefelsäure, Chlorsulfonsäure, Sulfurylchlorid, Perchlorsäure, Ameisensäure und/oder Essigsäure in konzentrierter oder verdünnter Form und auch als Gemische der vorgenannten Säuren einsetzen. Besonders bevorzugt sind die zuvor genannten anorganischen Säuren, also Mineralsäuren, und unter diesen insbesondere Schwefelsäure. Die erfindungsgemäß verwendeten Phosphonsäure- bzw. Phosphonat-Gruppen enthaltenden Ionenaustauscher zeichnen sich im Kontakt mit stark sauren Medien durch eine hohe Stabilität aus, weshalb das saure Waschen auch bei erhöhten Temperaturen erfolgen kann.

Das Siliziumdioxid und der erfindungsgemäß verwendete Ionenaustauscher werden vorzugsweise - aber nicht zwingend - getrennt voneinander von der flüssigen Phase der Fällsuspension bzw. dem sauren Waschmedium durchströmt, was insbesondere durch "kreisförmiges" Umpumpen der betreffenden Flüssigkeit bewerkstelligt wird. Im Rahmen dieses Umpumpens werden die durchströmten Feststoffe in beliebigen Gefäßen bzw. Aggregaten vorgehalten. Typische Aggregate zur Ermöglichung eines effektiven Ionenaustausches sind Säulen, die aus beliebigen Materialien bestehen können, sofern sie die Reinheit des Siliziumdioxids nicht beeinträchtigen und stark sauren Medien widerstehen.

Nach der erfindungsgemäßen Abtrennung von zwei- und höherwertigen Metallionen wird das Siliziumdioxid in der Regel mit vollentsalztem Wasser (VE-Wasser) so lange gewaschen, bis es als neutralgewaschen bezeichnet und getrocknet werden kann. Neutralgewaschen bedeutet, dass der pH-Wert des erhaltenen Siliziumdioxids bei 4 bis 7,5 liegt und/oder die Leitfähigkeit einer Suspension des gewaschenen Siliziumdioxids in VE-Wasser maximal 9 µS/cm, bevorzugt maximal 5 µS/cm beträgt.

Die nach dem erfindungsgemäßen Verfahren erhältlichen Siliziumdioxide sind dadurch gekennzeichnet, dass ihr Gehalt an Aluminium unter 5 ppm, an Bor unter 0,1 ppm, an Calcium maximal 0,5 ppm, an Eisen maximal 2 ppm, an Nickel maximal 0,5 ppm, an Phosphor unter 0,1 ppm, an Titan maximal 1 ppm und an Zink maximal 0,3 ppm beträgt.

Insbesondere zeichnen sich die nach dem erfindungsgemäßen Verfahren hergestellten Siliziumdioxid-Qualitäten durch außergewöhnlich niedrige Verunreinigungen an vierwertigen Metallen aus. So liegen beispielsweise die Zinn- und die Zirkoniumgehalte deutlich unter 0,1 ppm, bevorzugt unter 0,05 ppm, was mit anderen Verfahren wirtschaftlich nicht erreichbar ist; das nachfolgend angeführte Vergleichsbeispiel macht deutlich, dass der Gehalt an Zirkonium- bzw. Zinnverunreinigungen selbst durch 14-maliges Waschen mit 12%-iger Schwefelsäure nicht unter 0,1 ppm abgesenkt werden kann.

Die nach dem Verfahren erhältlichen hochreinen Siliziumdioxide können zu hochreinem Silizium für die Solarindustrie weiterverarbeitet werden. Dazu können die Siliziumdioxide mit hochreinem Kohlenstoff oder hochreinen Zuckern umgesetzt werden. Entsprechende Techniken sind dem Fachmann beispielsweise aus der Schrift WO 2007/106860 A1 bekannt.

Das durch die Erfindung zugängliche Siliziumdioxid kann auch als hochreiner Rohstoff für die Herstellung von besonders reinem Quarzglas für Lichtwellenleiter, Glasgeräte für Labor und Elektronik, als Katalysatorträger und als Ausgangsstoff für die Herstellung von hochreinen Silikasolen, die zum Polieren von Scheiben aus hochreinem Silizium (Wavern) im sogenannten CMP-Prozess eingesetzt werden, dienen.

Im Folgenden wird die Erfindung anhand eines Beispiels und eines Vergleichsbeispiels beschrieben, ohne dass sich durch diese Beschreibung eine Beschränkung hinsichtlich der Anwendungsbreite der Erfindung ergeben soll:

### Beispiel

In einer 6-L-Apparatur aus Borosilikat-Glas wurden 4,5 kg (3950 ml) 20%-ige Schwefelsäure (p.a.-Qualität) ohne weiteren Zusatz vorgelegt. Die Temperatur betrug 23°C und der in der Apparatur enthaltene Siebboden wurde entfernt.
Mit einer Schlauchpumpe (300 U/min, 8,0 mm Schlauch) wurden 1400 g Wasserglas 40/42 (30%) über einen Priller bzw. eine PTFE-Lochplatte mit 1,4 mm-Löchern zudosiert. Es entstanden keine Blindkörner. Nach 5,5 Minuten war die Wasserglasdosierung abgeschlossen; die Temperatur betrug nach der Prillung 30°C. Noch vor dem Start der Prillung bzw. der Wasserglaszugabe war eine Ionenaustauschersäule mit einem Volumen von 1000 ml eingebaut worden, um die Prilllösung bereits während der Prillung über den Ionenaustauscher leiten zu können. Die Säule war hierfür nach Reinigung mit 10%-iger Schwefelsäure 60 cm bzw. 700 ml hoch mit Purolite S957® gefüllt worden. Die Umpumpgeschwindigkeit betrug 75 U/min bzw. 280 g/min. Insgesamt wurde 2,5 Stunden bei Raumtemperatur umgepumpt (Probe 932), dann auf 80°C aufgeheizt und bei dieser Temperatur nochmals 2 Stunden über dieselbe Ionenaustauschersäule umgepumpt (Probe 933).

Anschließend wurde auf eine zweite 1000 ml-Ionenaustauschersäule umgebaut, die zuvor mit 10%-iger Schwefelsäure gereinigt und 60 cm hoch mit Lewatit® TP 260 gefüllt worden war. Über diese Säule wurde wieder 2 Stunden lang bei einer Temperatur von 80°C umgepumpt und anschließend abgelassen. Die Lösung hatte ein Volumen von 4400 ml und eine Masse von 4870 g. Die Schwefelsäure hatte nach dem Ablassen noch eine Konzentration von 12,69%, einen pH-Wert von 0,00 und eine Leitfähigkeit von 496 mS/cm.

Nun wurde anstelle der mit Lewatit® TP 260 gefüllten Säule nochmals eine ca. 700 ml Purolite S957®-enthaltende Säule eingebaut, die sich von der zuerst verwendeten Säule nur durch die Tatsache unterschied, dass ihre Vorreinigung bzw. Konditionierung mit nur 2%-iger Schwefelsäure erfolgt war. Nach Zugabe von 3500 g VE-Wasser wurde über Nacht stehen gelassen. Am nächsten Tag wurde die Apparatur wieder auf 80°C aufgeheizt und 2 Stunden bei 75 U/min bzw. 280 g/min umgepumpt. Anschließend wurde abgelassen und auf Umpumpen ohne Ionenaustauschersäule umgebaut. Die Schwefelsäure hatte eine Konzentration von 2,06%, einen pH-Wert von 0,72 und eine Leitfähigkeit von 95,0 mS/cm. In diesem Verfahrensstadium wurde die Probe 934 entnommen.

Zum Neutralwaschen des Siliziumdioxids wurde jeweils mit 3500 g VE-Wasser aufgefüllt und 30 Minuten umgepumpt. Insgesamt wurde siebenmal auf diese Weise mit VE-Wasser gewaschen und dadurch eine Leitfähigkeit von 2 µS/cm erreicht.

| Waschschritt | Temp. [°C] | Dauer [min] | pH-Wert | Leitfähigk. [µS/cm] | Bemerkungen |
|---|---|---|---|---|---|
| 1. Wasserschritt | 80 | 30 | 1,52 | 14890 | |
| 2. Wasserschritt | 80 | 30 | 2,36 | 2460 | |
| 3. Wasserschritt | 90 | 30 | 3,42 | 342 | |
| 4 . Wasserschritt | 80 | 30 | 4,10 | 43 | |
| 5. Wasserschritt | 80 | 30 | 4,79 | 9 | |
| 6. Wasserschritt | 40 | 30 | 5,77 | 2 | kalt |
| 7. Wasserschritt | 29 | 30 | 5,35 | 2 | kalt |

Das Produkt wurde in eine Quarzglasschale überführt, bei 160°C im Trockenschrank getrocknet und analysiert (Probe 935).
Die Ionenaustauscher der drei Säulen wurden unter Verwendung alkalischer Tartratlösung regeneriert, die Schwefelsäure in einem Säure-Retardationsverfahren von der Salzfracht befreit.
Der Gesamt-Säureverbrauch für den Prillschritt, bei dem 1400 g Wasserglas 40/42 bzw. 420 g SiO₂ eingesetzt wurden, betrug 4,5 kg 20%-ige Schwefelsäure bzw. 900 g H₂SO₄.
Extrapoliert ergibt sich für die Herstellung von einem Kilogramm hochreinem Siliziumdioxid demnach ein Verbrauch von 2,14 kg H₂SO₄.

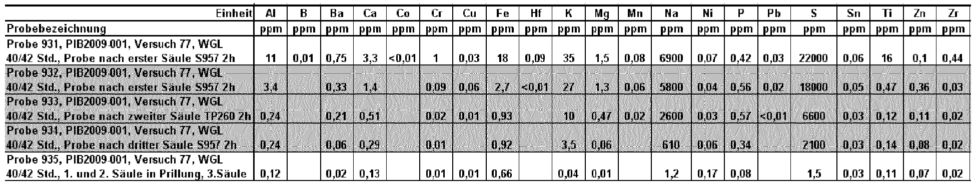

### Vergleichsbeispiel

In der für das oben beschriebene Beispiel verwendeten 6-L-Apparatur wurden 4,5 kg einer 13,5%-igen Schwefelsäure und 10 g einer 35%-igen Wasserstoffperoxid-Lösung vorgelegt. Die Temperatur betrug 24°C und der in der Apparatur enthaltene Siebboden wurde entfernt.
Mit einer Schlauchpumpe (700 U/min, 8,0 mm Schlauch) wurden 3000 g Wasserglas 40/42 über einen Priller bzw. eine PVDF-Lochplatte mit 2 mm-Löchern zudosiert. Die Prillkörper waren anfangs etwas größer, nahmen nach einigen Minuten aber normale Größe an. Nach 17 Minuten war die Wasserglasdosierung abgeschlossen. Mehr als 3000 g konnten nicht zudosiert werden, da ansonsten die Schwefelsäure komplett neutralisiert worden wäre. Die Temperatur betrug nach der Prillung 32°C. Nachdem noch 20 Minuten umgepumpt worden war, wurde abgelassen. Die Schwefelsäure hatte nach der Prillung eine Konzentration von 3,30%, einen pH-Wert von 0,79 und eine Leitfähigkeit von 148 mS/cm.

Anschließend wurde zwölfmal mit jeweils 3500 g 12%-iger Schwefelsäure gewaschen und danach noch zweimal mit 12%-iger Schwefelsäure in p.a.-Qualität; hierzu wurde mit einer Schlauchpumpe (100 U/min, 8,0 mm Schlauch) mit einer Umpumprate von 470 ml/min umgepumpt.

| Waschschritt | Temperatur [°C] | Dauer [min] | Bemerkungen |
|---|---|---|---|
| 1. Säureschritt | kalt (25°C) | 5 | |
| 2. Säureschritt | kalt (24°C) | 5 | |
| 3. Säureschritt | kalt (25°C) | 30 | |
| 4. Säureschritt | kalt (25°C) | 30 | |
| 5. Säureschritt | kalt (25°C) | 60 | +10g H₂O₂ |
| 6. Säureschritt | 80°C | 30 | |
| 7. Säureschritt | 80°C | 30 | |
| 8. Säureschritt | 80°C | 30 | |
| 9. Säureschritt | 80°C | 30 | |
| 10. Säureschritt | 80°C | 30 | |
| 11. Säureschritt | 80°C | 30 | |
| 12. Säureschritt | 80°C | 30 | |
| 13. Säureschritt | 80°C | 30 | p.a. Säure, über Nacht |
| 14. Säureschritt | 80°C | 30 | p.a. Säure |

Schließlich wurde mit je 3500 g VE-Wasser aufgefüllt und 30 Minuten umgepumpt.
Abschließend wurde noch dreizehnmal mit VE-Wasser gewaschen, bis eine Leitfähigkeit von 1 µS/cm erreicht wurde.

| Waschschritt | Temp. [°C] | Dauer [min] | pH-Wert | Leitfähigk. [µS/cm] | Bemerkun gen |
|---|---|---|---|---|---|
| 1. Wasserschritt | 46 | 30 | 0,49 | 150300 | kalt |
| 2. Wasserschritt | 33 | 30 | 0,88 | 40400 | kalt |
| 3. Wasserschritt | 28 | 30 | 1,45 | 12960 | kalt |
| 4. Wasserschritt | 26 | 30 | 1,98 | 4210 | kalt |
| 5. Wasserschritt | 80 | 30 | 2,49 | 1266 | |
| 6. Wasserschritt | 49 | 30 | 3,06 | 344 | kalt |
| 7. Wasserschritt | 34 | 30 | 3,60 | 87 | kalt |
| 8. Wasserschritt | 80 | 30 | 4,21 | 24 | |
| 9. Wasserschritt | 48 | 30 | 5,05 | 5 | kalt |
| 10. Wasserschritt | 34 | 30 | 4,65 | 10 | kalt, über Nacht |
| 11. Wasserschritt | 80 | 30 | 5,25 | 3 | |
| 12. Wasserschritt | 49 | 30 | 5,65 | 1 | kalt |
| 13. Wasserschritt | 34 | 30 | 5,60 | 1 | kalt |

Das Produkt wurde in eine Porzellanschale überführt, bei 160°C im Trockenschrank getrocknet und analysiert (Probe 837).
Der Gesamt-Säureverbrauch betrug 4,5 kg 13,5%-ige Schwefelsäure für den Prillschritt und 49 kg 12%-ige Schwefelsäure für den Waschprozess; dies entspricht 6488 g H₂SO₄.
Die eingesetzten 3000 g Wasserglas 40/42 entsprechen 900 g Siliziumdioxid, sodass sich für die Herstellung von einem Kilogramm hochreinem Siliziumdioxid ein Verbrauch von 7,21 kg H₂SO₄ ergibt.

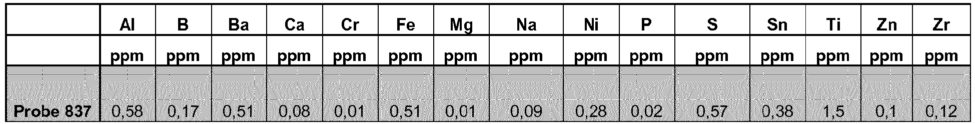

Die Bestimmung der Spurenelement-Gehalte erfolgte mittels hochauflösender induktiv gekoppelter Plasma-Massenspektrometrie (HR-ICPMS).

Hierzu wird eine genau bestimmte Masse einer 1 - 5 g Probe des zu untersuchenden Materials in einen PFA-Becher eingewogen und dann 1 g einer ca. 1%-igen Mannit-Lösung sowie 25 - 30 g einer ca. 50%-igen Flusssäure zugegeben. Nach kurzem Umschwenken wird der PFA-Becher in einem Heizblock auf 110°C erhitzt, so dass das in der Probe enthaltene Silizium als Hexafluorokieselsäure sowie die überschüssige Flusssäure langsam abdampfen. Der Rückstand wird mit 0,5 ml Salpetersäure (ca. 65 %) und wenigen Tropfen Wasserstoffperoxid-Lösung (ca. 30 %) innerhalb von ca. einer Stunde gelöst und mit Reinstwasser auf 10 g aufgefüllt.

Zur Bestimmung der Spurenelemente werden den Aufschlusslösungen 0,05 ml bzw. 0,1 ml entnommen, in ein Polypropylen-Probenröhrchen überführt, mit 0,1 ml Indium-Lösung (c = 0,1 mg/l) als interner Standard versetzt und auf 10 ml mit verdünnter Salpetersäure (ca. 3%) aufgefüllt.
Aus Multielement-Stammlösungen (c = 10 mg/l), in welchen alle zu analysierenden Elemente außer Indium enthalten sind, werden vier Kalibrierlösungen erstellt (c = 0,1; 0,5; 1,0; 5,0 µg/l), wiederum mit dem Zusatz von 0,1 ml Indium-Lösung (c = 0,1 mg/l) auf 10 ml Endvolumen. Zusätzlich werden Blindwertlösungen hergestellt mit 0,1 ml Indium-Lösung (c = 0,1 mg/l) auf 10 ml Endvolumen.
Die Elementgehalte in den so hergestellten Blindwert-, Kalibrier- und Probenlösungen werden mittels der High Resolution

Inductively Coupled Mass Spectrometry (HR-ICPMS) unter externer Kalibrierung bestimmt. Die Messung erfolgt mit einer Massenauflösung (m/Δm) von mindestens 4000 bzw. von - für die Elemente Kalium, Arsen und Selen - mindestens 10000.

## Patentansprüche

1. Verfahren zur Herstellung von hochreinem Siliziumdioxid, umfassend die nachfolgend genannten Prozessschritte
a) Herstellung einer Vorlage aus einem Säuerungsmittel oder einem Säuerungsmittel und Wasser mit einem pH-Wert von kleiner 2,
b) Bereitstellen einer Silikatlösung mit einer Viskosität von 0,1 bis 10000 Poise,
c) Zugabe der Silikatlösung aus Schritt b) in die Vorlage aus Schritt a) derart, dass der pH-Wert der erhaltenen Fällsuspension jederzeit auf einem Wert kleiner 2 bleibt,
d) Abtrennen und Waschen des erhaltenen Siliziumdioxids, wobei das Waschmedium einen pH-Wert kleiner 2 aufweist,
e) Neutralwaschen des Siliziumdioxids mit vollentsalztem Wasser (VE-Wasser),
f) Trocknen des erhaltenen Siliziumdioxids,
mit der Maßgabe, dass mindestens ein Phosphonat-Ionenaustauscher mit der flüssigen Phase der Fällsuspension im Rahmen von Prozessschritt c) oder mit dem Waschmedium im Rahmen von Prozessschritt d) oder mit beidem zwecks Ionenaustausch in Kontakt gebracht wird.

2. Verfahren nach Anspruch 1, bei dem die flüssigen Phase der Fällsuspension im Rahmen von Prozessschritt c) oder das Waschmedium im Rahmen von Prozessschritt d), welche mit mindestens einem Phosphonat-Ionenaustauscher in Kontakt gebracht werden, oder beide zur Verbesserung des Ionenaustausches umgepumpt oder bewegt werden.

3. Verfahren nach einem der vorhergehenden Ansprüche, bei dem das in der Vorlage enthaltene Säuerungsmittel Schwefelsäure umfasst.

4. Verfahren nach einem der vorhergehenden Ansprüche, bei dem der Ionenaustausch mit dem Phosphonat-Ionenaustauscher parallel zur Herstellung des hochreinen Siliziumdioxids bzw. im zeitlichen Rahmen des Herstellverfahrens erfolgt.

5. Verfahren nach einem der vorhergehenden Ansprüche, bei dem die Herstellung des hochreinen Siliziumdioxids ein kontinuierlicher oder ein diskontinuierlicher Prozess ist.

6. Verfahren nach einem der vorhergehenden Ansprüche, bei dem der Phosphonat-Ionenaustauscher parallel zur Herstellung des hochreinen Siliziumdioxids bzw. im zeitlichen Rahmen des Herstellverfahrens einer Regeneration unterzogen wird.

7. Verfahren nach einem der Ansprüche 1 bis 5, bei dem der Phosphonat-Ionenaustauscher einer Regeneration unterzogen wird.

8. Verfahren nach Anspruch 6 oder 7, bei dem die zur Regeneration verwendete alkalische Lösung Tartrat-, Citrat-, Oxalat- oder EDTA-Ionen umfasst.

9. Verfahren nach einem der vorhergehenden Ansprüche, bei dem die flüssigen Phase der Fällsuspension im Rahmen von Prozessschritt c) oder das Waschmedium im Rahmen von Prozessschritt d) oder beide durch Anwendung eines Säure-Retardationsverfahrens gereinigt werden.

10. Verfahren nach einem der vorhergehenden Ansprüche bei dem ein Aminomethylphosphonsäure- bzw. Aminomethylphosphonatfunktionalisierter Phosphonat-Ionenaustauscher verwendet wird.

11. Verfahren nach einem der Ansprüche 1 bis 9, wobei der Phosphonat-Ionenaustauscher mit Struktureinheiten der Formel R-NR'CH₂P(O)(OH)₂ funktionalisiert ist und wobei R' einen beliebigen Rest außer Wasserstoff darstellt, der gleich oder verschieden von R ist.

12. Verfahren nach einem der Ansprüche 1 bis 9, wobei der Phosphonat-Ionenaustauscher mit Struktureinheiten der Formel R-NHCH₂P(O) (OH)₂ funktionalisiert ist und wobei R einen beliebigen Rest darstellt.

13. Verfahren nach einem der Ansprüche 1 bis 9, wobei der Phosphonat-Ionenaustauscher mit Struktureinheiten der Formel RR'C[PO(OH)₂]₂ funktionalisiert ist und wobei R' einen beliebigen Rest darstellt, der gleich oder verschieden von R ist.

14. Verfahren nach einem der Ansprüche 1 bis 9, wobei der Phosphonat-Ionenaustauscher neben den normalen Struktureinheiten der Formel R-P(O)(OH)₂ zusätzlich Sulfonsäure- bzw. SulfonatGruppen enthält.

15. Verfahren nach einem der Ansprüche 10 bis 14, bei der die funktionellen Phosphonsäure-Gruppen des Phosphonat-Ionenaustauschers mindestens teilweise in mit Alkalimetallionen beladener bzw. neutralisierter Form vorliegen.

## Claims

1. Method of producing high-purity silica comprising the following process steps:
a) preparing an initial charge from an acidifying agent or an acidifying agent and water having a pH of less than 2,
b) providing a silicate solution having a viscosity of 0.1 to 10 000 poise,
c) adding the silicate solution from step b) to the initial charge from step a) in such a way that the pH of the resulting precipitation suspension remains at a value of less than 2 at all times,
d) removing and washing the silicon dioxide obtained, where the wash medium has a pH of less than 2,
e) washing the silicon dioxide to neutrality with demineralized water,
f) drying the silicon dioxide obtained,
with the proviso that at least one phosphonate ion exchanger, for the purpose of ion exchange, is contacted with the liquid phase of the precipitation suspension in the course of process step c) or with the wash medium in the course of process step d) or with both.

2. Method according to Claim 1, in which the liquid phase of the precipitation suspension in the course of process step c) or the wash medium in the course of process step d) which are contacted with at least one phosphonate ion exchanger or both are pumped in circulation or agitated for improvement of the ion exchange.

3. Method according to one of the preceding claims, wherein the acidifying agent contained in the preparation comprises sulphuric acid.

4. Method according to one of the preceding claims, wherein the ion exchange with the phosphonate ion exchanger takes place in parallel with the production of the high-purity silica or within the timeframe of the production process.

5. Method according to one of the preceding claims, wherein the production of the high-purity silica is a continuous or a discontinuous process.

6. Method according to one of the preceding claims, wherein the phosphonate ion exchanger undergoes regeneration in parallel with the production of the high-purity silica or within the timeframe of the production process.

7. Method according to one of Claims 1 to 5, wherein the phosphonate ion exchanger undergoes regeneration.

8. Method according to Claim 6 or 7, wherein the alkaline solution used for regeneration comprises tartrate, citrate, oxalate or EDTA ions.

9. Method according to one of the preceding claims, wherein the liquid phase of the precipitation suspension in the course of process step c) or the wash medium in the course of process step d), or both, are purified by employing an acid retardation process.

10. Method according to one of the preceding claims, wherein an aminomethylphosphonic acid- or aminomethylphosphonate-functionalized phosphonate ion exchanger is used.

11. Method according to one of Claims 1 to 9, wherein the phosphonate ion exchanger is functionalized with structural units of the formula R-NR'CH₂P(O)(OH)₂ and wherein R' represents any residue except hydrogen, which is identical to or different from R.

12. Method according to one of Claims 1 to 9, wherein the phosphonate ion exchanger is functionalized with structural units of the formula R-NHCH₂P(O)(OH)₂ and wherein R represents any residue.

13. Method according to one of Claims 1 to 9, wherein the phosphonate ion exchanger is functionalized with structural units of the formula RR'C[PO(OH)₂]₂ and wherein R' represents any residue, which is identical to or different from R.

14. Method according to one of Claims 1 to 9, wherein as well as the normal structural units of formula R-P(O) (OH)₂ the phosphonate ion exchanger additionally contains sulphonic acid or sulphonate groups.

15. Method according to one of Claims 10 to 14, wherein the functional phosphonic acid groups of the phosphonate ion exchanger are in a form at least partially loaded with alkali metal ions or in neutralized form.

## Revendications

1. Procédé de fabrication de dioxyde de silicium hautement pur, comprenant les étapes de procédé suivantes :
a) la fabrication d'une charge initiale à partir d'un agent acidifiant ou d'un agent acidifiant et d'eau ayant un pH inférieur à 2,
b) la préparation d'une solution de silicate ayant une viscosité de 0,1 à 10 000 Poise,
c) l'ajout de la solution de silicate de l'étape b) à la charge initiale de l'étape a) de telle sorte que le pH de la suspension de précipitation obtenue reste à tout moment à une valeur inférieure à 2,
d) la séparation et le lavage du dioxyde de silicium obtenu, le milieu de lavage présentant un pH inférieur à 2,
e) le lavage neutre du dioxyde de silicium avec de l'eau entièrement dessalée,
f) le séchage du dioxyde de silicium obtenu,
à condition qu'au moins un échangeur d'ions phosphonate soit mis en contact avec la phase liquide de la suspension de précipitation dans le cadre de l'étape de procédé c) ou avec le milieu de lavage dans le cadre de l'étape de procédé d) ou avec les deux, pour l'échange d'ions.

2. Procédé selon la revendication 1, selon lequel la phase liquide de la suspension de précipitation dans le cadre de l'étape de procédé c) ou le milieu de lavage dans le cadre de l'étape de procédé d), qui ont été mis en contact avec au moins un échangeur d'ions phosphonate, ou les deux sont pompés ou agités pour améliorer l'échange d'ions.

3. Procédé selon l'une quelconque des revendications précédentes, selon lequel l'agent acidifiant contenu dans la charge initiale comprend de l'acide sulfurique.

4. Procédé selon l'une quelconque des revendications précédentes, selon lequel l'échange d'ions avec l'échangeur d'ions phosphonate a lieu en parallèle de la fabrication du dioxyde de silicium hautement pur ou dans le cadre temporel du procédé de fabrication.

5. Procédé selon l'une quelconque des revendications précédentes, selon lequel la fabrication du dioxyde de silicium hautement pur est un procédé continu ou discontinu.

6. Procédé selon l'une quelconque des revendications précédentes, selon lequel l'échangeur d'ions phosphonate est soumis à une régénération en parallèle de la fabrication du dioxyde de silicium hautement pur ou dans le cadre temporel du procédé de fabrication.

7. Procédé selon l'une quelconque des revendications 1 à 5, selon lequel l'échangeur d'ions phosphonate est soumis à une régénération.

8. Procédé selon la revendication 6 ou 7, selon lequel la solution alcaline utilisée pour la régénération comprend des ions tartrate, citrate, oxalate ou EDTA.

9. Procédé selon l'une quelconque des revendications précédentes, selon lequel la phase liquide de la suspension de précipitation dans le cadre de l'étape de procédé c) ou le milieu de lavage dans le cadre de l'étape de procédé d) ou les deux sont purifiés en utilisant un procédé de retardement d'acide.

10. Procédé selon l'une quelconque des revendications précédentes, selon lequel un échangeur d'ions phosphonate à fonctionnalisation acide aminométhylphosphonique ou phosphonate d'aminométhyle est utilisé.

11. Procédé selon l'une quelconque des revendications 1 à 9, selon lequel l'échangeur d'ions phosphonate est fonctionnalisé avec des unités structurales de formule R-NR'CH₂P(O)(OH)₂, R' représentant un radical quelconque autre que l'hydrogène, qui est identique ou différent de R.

12. Procédé selon l'une quelconque des revendications 1 à 9, selon lequel l'échangeur d'ions phosphonate est fonctionnalisé avec des unités structurales de formule R-NHCH₂P(O)(OH)₂, R représentant un radical quelconque.

13. Procédé selon l'une quelconque des revendications 1 à 9, selon lequel l'échangeur d'ions phosphonate est fonctionnalisé avec des unités structurales de formule RR'C[PO(OH)₂]₂, R' représentant un radical quelconque qui est identique ou différent de R.

14. Procédé selon l'une quelconque des revendications 1 à 9, selon lequel l'échangeur d'ions phosphonate contient en plus des unités structurales normales de formule R-P(O) (OH)₂ également des groupes acide sulfonique ou sulfonate.

15. Procédé selon l'une quelconque des revendications 10 à 14, selon lequel les groupes fonctionnels acide phosphonique de l'échangeur d'ions phosphonate se présentent au moins en partie sous forme chargée avec des ions de métaux alcalins ou neutralisée.
